# EUROPEAN PATENT APPLICATION

(11) **EP 4 596 619 A1**
(43) Date of publication of application: **06.08.2025**
(21) Application number: 23872294.6
(22) Date of filing: 26.09.2023
(51) Int. Cl.: C08L 23/26, C08F 8/46, C09J 123/26

(54) **POLYMER COMPOSITION AND METHOD FOR PRODUCING POLYMER COMPOSITION, AND AQUEOUS DISPERSION COMPOSITION**

(30) Priority: 27.09.2022 JP 2022153904
(71) Applicant: MCPP Innovation LLC, Tokyo 100-8251 (JP)
(72) Inventor: TAKASHIMA, Masaru, Tokyo 100-8251 (JP)
(74) Representative: Hoffmann Eitle
(86) International application number: PCT/JP2023/034823
(87) International publication number: WO 2024/071071

(57) **Abstract**

A polymer composition comprising a modified polypropylene modified with at least one selected from the group consisting of an unsaturated carboxylic acid and a derivative thereof, wherein a difference (X1-X2) between the unsaturated carboxylic acid and/or its derivative content (X1) in the polymer composition before acetone extraction and the unsaturated carboxylic acid and/or its derivative content (X2) in the polymer composition after acetone extraction is 0.01% by mass or more and 0.5% by mass or less, the mass ratio X2 (% by mass) is 0.7% by mass or more and 1.8% by mass or less, and an MFR of the polymer composition measured in accordance with JIS K7210 under conditions of 180°C, a load of 2.16 kg, and a 1 mm orifice is 1 g/10 min or more and 40 g/10 min or less.

## Description

### Technical Field

The present invention relates to a polymer composition that enables an adhesive having excellent adhesion and heat resistance, and a method for producing the same.

The present invention also relates to an adhesive containing the polymer composition, a polymer composition for aqueous dispersion containing the polymer composition, and an aqueous dispersion composition containing the polymer composition.

### Background Art

In the fields of building materials and automobiles, components are used in which an adherend having low polarity, such as polypropylene or ABS, is bonded to metal or a high polarity adherend using an adhesive. From the perspective of environmental response in recent years, the adhesive used here is required to be a solvent-free type that does not use an organic solvent.

As a solvent-free adhesive that can adhere to these adherends, one made of an aqueous dispersion composition containing an acid-modified polyolefin is known (Patent Literature1, Patent Literature 2).

### Citation List

### Patent Literature

[Patent Literature 1] JP 2015-117382 A
[Patent Literature 2] JP 2015-163688 A

### Summary of Invention

### Technical Problem

Adhesives having improved adhesion and heat resistance have been required for building materials and automotive applications, conventional adhesives containing an acid-modified polyolefin have room for improvement in terms of both adhesion and heat resistance.

An object of the present invention is to provide a polymer composition that enables an adhesive having excellent adhesion and heat resistance, and a method for producing the same.

Another object of the present invention is to provide an adhesive containing the polymer composition, a polymer composition for aqueous dispersion containing the polymer composition, and an aqueous dispersion composition containing the polymer composition.

### Solution to Problem

The present inventor has discovered that a polymer composition that enables an adhesive to have excellent adhesion and heat resistance can be obtained when the polymer composition contains an unsaturated carboxylic acid-modified polypropylene and an unsaturated carboxylic acid, and has a modification rate of the unsaturated carboxylic acid-modified polypropylene, a content of the unsaturated carboxylic acid, and the MFR within specific numerical ranges.

The present invention has the following gist.
[1] A polymer composition comprising a modified polypropylene modified with at least one selected from the group consisting of an unsaturated carboxylic acid and a derivative thereof,
   wherein a difference (X1-X2) between a mass ratio X1 (% by mass) defined below and a mass ratio X2 (% by mass) defined below is 0.01% by mass or more and 0.5% by mass or less,
   the mass ratio X2 (% by mass) is 0.7% by mass or more and 1.8% by mass or less, and
   an MFR of the polymer composition measured in accordance with JIS K7210 under conditions of 180°C, a load of 2.16 kg, and a 1 mm orifice is 1 g/10 min or more and 40 g/10 min or less.

   Mass ratio X1 (% by mass): The polymer composition is press-molded into a circular sheet having a thickness of 100 µm and a diameter of 20 mm under conditions of 200°C, 5 MPa, and for 3 minutes. The obtained circular sheet is used as a measurement sample, and carbonyl characteristic absorption at 1900 to 1600 cm⁻¹ of the sample is measured by infrared absorption spectroscopy. A calibration curve is created from the measured values. The mass ratio (% by mass) of the total mass of the unsaturated carboxylic acid and/or its derivative graft-polymerized to the polypropylene in the measurement sample and the unsaturated carboxylic acid and/or its derivative present in a form of a simple substance in the measurement sample to the mass of the measurement sample is calculated from the calibration curve. A value thus calculated is the mass ratio X1 (% by mass).
   Mass ratio X2 (% by mass): The polymer composition is press-molded into a circular sheet having a thickness of 100 µm and a diameter of 20 mm under conditions of 200°C, 5 MPa, and for 3 minutes. The obtained circular sheet is placed in a Soxhlet extractor, refluxed with acetone at 80°C for 1 hour, and then dried at 80°C for 2 hours. The dried circular sheet is used as a measurement sample, and carbonyl characteristic absorption at 1900 to 1600 cm⁻¹ of the sample is measured by infrared absorption spectroscopy. A calibration curve is created from the measured values. The mass ratio (% by mass) of the mass of the unsaturated carboxylic acid and/or its derivative graft-polymerized to the polypropylene in the measurement sample to the mass of the measurement sample is calculated from the calibration curve. A value thus calculated is the mass ratio X2 (% by mass).
[2] The polymer composition according to [1], wherein the polymer composition has an MFR of 5 g/10 min or more and 40 g/10 min or less, measured in accordance with JIS K7210 under conditions of 180°C, a load of 2.16 kg, and a 1 mm orifice.
[3] The polymer composition according to [1] or [2], wherein the polymer composition is a polymer composition for aqueous dispersion.
[4] A method for producing the polymer composition according to any one of [1] to [3], comprising a step of reacting a raw material polypropylene containing polypropylene (a) having a flexural modulus of 100 MPa or more and 2000 MPa or less with an unsaturated carboxylic acid and/or its derivative (b) in the presence of peroxy esters (c1) and dialkyl peroxides (c2).
[5] The method for producing the polymer composition according to [4], wherein the peroxy esters (c1) are t-butylperoxyisopropyl carbonates.
[6] The method for producing the polymer composition according to [4] or [5], wherein the dialkyl peroxides (c2) are di-t-butyl peroxides.
[7] The method for producing the polymer composition according to any one of [4] to [6], wherein the raw material polypropylene further contains polypropylene (d) having a flexural modulus of less than 100 MPa or a viscosity at 190°C of 100 cP or more and 3000 cP or less.
[8] The method for producing the polymer composition according to any one of [4] to [7], wherein the content of the polypropylene (a) is 50% by mass or more and 100% by mass or less based on 100% by mass of the raw material polypropylene.
[9] The method for producing the polymer composition according to [7] or [8], wherein the content of the polypropylene (d) is 1% by mass or more and 50% by mass or less based on 100% by mass of the raw material polypropylene.
[10] An adhesive comprising the polymer composition according to any one of [1] to [3].
[11] An aqueous dispersion composition comprising the polymer composition according to any one of [1] to [3], a surfactant, and water.

### Advantageous Effects of Invention

The polymer composition of the present invention and the aqueous dispersion composition containing the polymer composition can provide an adhesive having excellent adhesion and heat resistance.

### Description of Embodiments

Embodiments of the present invention will be described in detail below. The following description is an Example of the embodiment of the present invention, and the present invention is not limited to the following description. The present invention can be modified and practiced in any manner that is consistent with the scope of the present invention.

In this specification, when numerical values or physical property values are expressed by using "to" with preceding and following numbers, it is to be understood that the preceding and following numbers are included.

In the following, a monomer unit contained in a copolymer may be simply referred to as "units". For Example, a monomer unit based on propylene may be referred to as a "propylene unit", and a monomer unit based on ethylene and a monomer unit based on an α-olefin may be referred to as an "ethylene unit" and an "α-olefin unit", respectively.

In the present invention, an MFR (melt flow rate) of a polymer composition is measured in accordance with JIS K7210 under conditions of 180°C, a load of 2.16 kg, and a 1 mm orifice.

An MFR (melt flow rate) of polypropylene is measured in accordance with JIS K7210 under conditions of 230°C, a load of 2.16 kg, and a 2 mm orifice.

In the present invention, a flexural modulus of a polymer composition and polypropylene is a value measured in accordance with JIS K 7171.

A viscosity at 190°C of polypropylene is a viscosity measured at 190°C by a method conforming to JIS K 2283.

A density of polypropylene is a value measured in accordance with JIS K 7112.

### [Polymer composition]

The polymer composition of the present invention is characterized in that it is a polymer composition containing a modified polypropylene (hereinafter, sometimes referred to as "modified polypropylene of the present invention") modified with at least one selected from the group consisting of unsaturated carboxylic acids and derivatives thereof,
wherein a difference (X1-X2) between a mass ratio X1 (% by mass) defined below and a mass ratio X2 (% by mass) defined below is 0.01% by mass or more and 0.5% by mass or less,
the mass ratio X2 (% by mass) is 0.7% by mass or more and 1.8% by mass or less, and
an MFR of the polymer composition measured in accordance with JIS K7210 under conditions of 180°C, a load of 2.16 kg, and a 1 mm orifice is 1 g/10 min or more and 40 g/10 min or less.

Mass ratio X1 (% by mass): The polymer composition is press-molded into a circular sheet having a thickness of 100 µm and a diameter of 20 mm under conditions of 200°C, 5 MPa, and for 3 minutes. The obtained circular sheet is used as a measurement sample, and carbonyl characteristic absorption at 1900 to 1600 cm⁻¹ of the sample is measured by infrared absorption spectroscopy. A calibration curve is created from the measured values. The mass ratio (% by mass) of the total mass of the unsaturated carboxylic acid and/or its derivative graft-polymerized to the polypropylene in the measurement sample and the unsaturated carboxylic acid and/or its derivative present in a form of a simple substance in the measurement sample to the mass of the measurement sample is calculated from the calibration curve. A value thus calculated is the mass ratio X1 (% by mass).
Mass ratio X2 (% by mass): The polymer composition is press-molded into a circular sheet having a thickness of 100 µm and a diameter of 20 mm under conditions of 200°C, 5 MPa, and for 3 minutes. The obtained circular sheet is placed in a Soxhlet extractor, refluxed with acetone at 80°C for 1 hour, and then dried at 80°C for 2 hours. The dried circular sheet is used as a measurement sample, and carbonyl characteristic absorption at 1900 to 1600 cm⁻¹ of the sample is measured by infrared absorption spectroscopy. A calibration curve is created from the measured values. The mass ratio (% by mass) of the mass of the unsaturated carboxylic acid and/or its derivative graft-polymerized to the polypropylene in the measurement sample to the mass of the measurement sample is calculated from the calibration curve. A value thus calculated is the mass ratio X2 (% by mass).

Hereinafter, the mass ratio X1 (% by mass) may be referred to as the "unsaturated carboxylic acid and/or its derivative content (X1) in the polymer composition before acetone extraction" and the mass ratio X2 (% by mass) may be referred to as the "unsaturated carboxylic acid and/or its derivative content (X2) in the polymer composition after acetone extraction".

Although the polymer composition of the present invention is called a "polymer composition" because it contains modified polypropylene modified with an unsaturated carboxylic acid and/or a derivative thereof, and an unsaturated carboxylic acid and/or a derivative thereof that exists in a form of a simple substance without being graft polymerized to the modified polypropylene after the modification treatment of the raw material polypropylene, as described below, it is also called a "modified polypropylene" industrially.

The polymer composition of the present invention is preferably produced by reacting a raw material polypropylene containing polypropylene (a) having a flexural modulus of 100 MPa or more and 2000 MPa or less with an unsaturated carboxylic acid and/or a its derivative (b) in the presence of peroxy esters (c1) and dialkyl peroxides (c2) according to the method for producing the polymer composition of the present invention.

The polymer composition of the present invention is useful as an adhesive component of an aqueous dispersion composition as a water-based adhesive.

### [About mass ratio X1 (% by mass) and mass ratio X2 (% by mass) of the polymer composition]

### <Mass ratio X1 (% by mass)>

The mass ratio X1 (% by mass) is the mass ratio (X1) of the unsaturated carboxylic acid and/or its derivative in the polymer composition before acetone extraction, when the polymer composition is taken as 100% by mass. It is a value measured as follows.

The polymer composition is press-molded into a circular sheet having a thickness of 100 µm and a diameter of 20 mm under conditions of 200°C, 5 MPa, and 3 minutes to obtain a circular sheet. This circular sheet is used as a measurement sample for infrared absorption spectrum, and the content of carboxylic acid and/or its derivative is obtained from the absorption specific to the carboxylic acid and/or its derivative using infrared absorption spectroscopy. Specifically, it is determined by measuring the carbonyl characteristic absorption at 1900 to 1600 cm⁻¹ (C=O stretching vibration band). The value thus obtained is the mass ratio X1 (% by mass), which is the mass ratio (X1) of the unsaturated carboxylic acid and/or its derivative in the polymer composition before acetone extraction, when the polymer composition is taken as 100% by mass.

### <Mass ratio X2 (% by mass)>

The mass ratio X2 (% by mass) is the mass ratio (X2) of the unsaturated carboxylic acid and/or its derivative in the polymer composition after acetone extraction, when the polymer composition is taken as 100% by mass. It is a value measured as follows.

The polymer composition is press-molded into a circular sheet having a thickness of 100 µm and a diameter of 20 mm under conditions of 200°C, 5 MPa, and 3 minutes to obtain a circular sheet. This circular sheet is placed in a Soxhlet extractor and acetone refluxed at 80°C for 1 hour. Here, the acetone extraction is performed for the purpose of removing the unsaturated carboxylic acid and/or its derivative that is not graft-polymerized to polypropylene and exists in a form of a simple substance in the polymer composition as a reaction residue.

Then, the circular sheet is dried at 80°C for 2 hours using a heating dryer. The dried circular sheet is used as a sample for measuring infrared absorption spectrum, and the content of carboxylic acid and/or its derivative is determined from the absorption specific to carboxylic acid and/or its derivative using infrared absorption spectrum. Specifically, it is determined by measuring the carbonyl characteristic absorption at 1900 to 1600 cm⁻¹ (C=O stretching vibration band). The value thus obtained is the mass ratio X2 (% by mass), which is the unsaturated carboxylic acid and/or its derivative content (X2) in the polymer composition after acetone extraction, when the polymer composition is taken as 100 % by mass.

The mass ratio X1 (% by mass) means the content of the unsaturated carboxylic acid and/or its derivative graft-polymerized to the modified polypropylene contained in the polymer composition, and the content of the unsaturated carboxylic acid and/or its derivative present in a form of a simple substance in the polymer composition as a reaction residue.

On the other hand, the mass ratio X2 (% by mass) means the content of the unsaturated carboxylic acid and/or its derivative graft-polymerized to the modified polypropylene contained in the polymer composition.

Therefore, the difference (X1-X2) between the mass ratio X1 (% by mass) and the mass ratio X2 (% by mass) of the polymer composition (100 % by mass) means the content of the unsaturated carboxylic acid and/or its derivative present in the polymer composition as a reaction residue present in a form of a simple substance.

The mass ratio X2 (% by mass), i.e., the content of the unsaturated carboxylic acid and/or its derivative graft-polymerized to the modified polypropylene contained in the polymer composition, can also be confirmed by the following NMR spectrum measurement.

25 mg of a sample of the methyl esterified polymer composition is weighed into an NMR sample tube having an outer diameter of 5 mm, and 0.52 mL of deuterated orthodichlorobenzene (ODCB-d4) is added and dissolved at 130°C. The ¹H-NMR spectrum is measured using the AVANCE NEO 600 spectrometer manufactured by Bruker to identify the ¹H-NMR of the methyl esterified product of the acid-modified polyolefin in the polymer composition. Furthermore, the area of the peak originating from impurities that overlaps with the peak position of the methyl esterified product in the ¹H-NMR of the methyl esterified product is identified from the ¹H-NMR of the acid-modified polyolefin in the polymer composition before methyl esterification. The peak area of the methyl esterified product is obtained by subtracting the peak area derived from the impurity peak area from the at the peak position of the methyl esterified product. The X2, which is the content of the unsaturated carboxylic acid and/or its derivative graft-polymerized to the modified polypropylene contained in the polymer composition, can be calculated from the ratio of the mass of the acid-modified group derived based on the peak area to the mass of the acid-modified polyolefin in the polymer composition before methyl esterification.

### <Mass ratio X1 (% by mass)>

The polymer composition of the present invention preferably has the unsaturated carboxylic acid and/or its derivative content (X1) in the polymer composition before acetone extraction of 0.7 % by mass or more and 2.3 % by mass or less, when the polymer composition is taken as 100 % by mass.

The upper limit of the mass ratio X1 (% by mass) is more preferably 2.2 % by mass or less, and even more preferably 2.1 % by mass or less from the viewpoint of heat resistance.

### <Mass ratio X2 (% by mass)>

The polymer composition of the present invention has a mass ratio X2 (% by mass), which is the unsaturated carboxylic acid and/or its derivative content (X2) in the polymer composition after acetone extraction of 0.7 % by mass or more and 1.8 % by mass or less, when the polymer composition is taken as 100 % by mass.

When the lower limit of the mass ratio X2 (% by mass) is 0.7 % by mass or more, the content of the unsaturated carboxylic acid and/or its derivative graft-polymerized to the modified polypropylene is high, and the adhesion to the adherend is effectively expressed and the dispersibility in the aqueous solvent is improved. From this viewpoint, the lower limit of the mass ratio X2 (% by mass) is preferably 0.8 % by mass or more, and more preferably 0.9 % by mass or more.

On the other hand, when the upper limit of the mass ratio X2 (% by mass) is 1.8 % by mass or less, excessive reaction with the adherend can be suppressed. From this viewpoint, the upper limit of the mass ratio X2 (% by mass) is preferably 1.7 % by mass or less, and more preferably 1.6 % by mass or less.

The mass ratio X2 (% by mass) can be controlled by the amount of the unsaturated carboxylic acid and/or its derivative (b) added during the modification treatment of the raw material polypropylene described below, and the type and amount of the radical generator used.

### <Difference between mass ratio X1 (% by mass) and mass ratio X2 (% by mass) (X1-X2)>

In the polymer composition of the present invention, the difference (hereinafter, sometimes referred to as the "content of the unsaturated carboxylic acid and/or its derivative present in a form of a simple substance") (X1-X2) between the mass ratio X1 (% by mass), which is the unsaturated carboxylic acid and/or its derivative content (X1) in the polymer composition before acetone extraction, and the mass ratio X2 (% by mass), which is the unsaturated carboxylic acid and/or its derivative content (X2) in the polymer composition after acetone extraction, is 0.01 % by mass or more and 0.5 % by mass or less, when the polymer composition is taken as 100 % by mass.

When the upper limit of the content (X1-X2) of the unsaturated carboxylic acid and/or its derivative present in a form of a simple substance is 0.5 % by mass or less, it is possible to suppress adhesion inhibition due to the unsaturated carboxylic acid and/or its derivative present in a form of a simple substance, and also to reduce odor. From this viewpoint, the upper limit of the content (X1-X2) of the unsaturated carboxylic acid and/or its derivative present in a form of a simple substance is usually 0.5 % by mass or less, and preferably 0.4 % by mass or less.

On the other hand, although the lower limit of the content (X1-X2) of the unsaturated carboxylic acid and/or its derivative present in a form of a simple substance is not particularly limited, it is usually 0.01 % by mass or more.

The content (X1-X2) of the unsaturated carboxylic acid and/or its derivative (b) present in a form of a simple substance can be controlled by the amount of the unsaturated carboxylic acid and/or its derivative (b) added during the modification treatment of the raw material polypropylene described below, and the type and amount of the radical generator used.

### [MFR]

The polymer composition of the present invention has an MFR of 1 g/10 min or more and 40 g/10 min or less, measured in accordance with to JIS K7210 under conditions of 180°C, a load of 2.16 kg, and a 1 mm orifice.

When the lower limit of the MFR is 1 g/10 min or more, the necessary fluidity as an adhesive can be ensured. From this viewpoint, the lower limit of the MFR measured under the above mentioned measurement conditions of the polymer composition of the present invention is preferably 5 g/10 min or more.

On the other hand, when the upper limit of the MFR measured under the above mentioned measurement conditions of the polymer composition of the present invention to 40 g/10 min or less, the necessary heat resistance as an adhesive can be ensured. From this viewpoint, the upper limit of the MFR measured under the above mentioned measurement conditions of the polymer composition of the present invention is preferably 35 g/10 min or less.

### [Modified polypropylene]

The modified polypropylene of the present invention is a modified polypropylene obtained by modifying polypropylene with at least one selected from the group consisting of an unsaturated carboxylic acid and a derivative thereof.

The modified polypropylene of the present invention is produced by modifying the raw polypropylene described below with an unsaturated carboxylic acid and/or its derivative (b) in the presence of a radical generator.

The polypropylene to be modified (referred to as the "raw polypropylene" in the present invention) is not particularly limited, and a homopolymer of propylene or a copolymer of propylene and another monomer can be used. Examples of other monomers that can form the copolymer include ethylene, and α-olefins having 3 to 20 carbon atoms, such as propylene, 1-butene, 3-methyl-1-butene, 1-pentene, 4-methyl-1-pentene, 4,4-dimethyl-1-pentene, 1-hexene, 4-methyl-1-hexene, 1-heptene, 1-octene, 1-decene, 1-octadecene, and the like. These other monomers may be used alone or in any combination of two or more.

Specific Examples of the polypropylene to be modified include propylene-based copolymers such as propylene-ethylene random copolymers, propylene-butene random copolymers, propylene-ethylene-hexene random copolymers, propylene-ethylene-octene random copolymers, propylene-butene-hexene random copolymers, propylene-butene-octene random copolymers, propylene-hexene-octene random copolymers, propylene-ethylene block copolymers, and the like.

From the viewpoint of achieving both heat resistance and adhesion, it is preferable that the raw polypropylene contains polypropylene having a flexural modulus of 100 MPa or more and 2000 MPa or less (hereinafter, sometimes referred to as "polypropylene (a)"), and it is more preferable that it contains the polypropylene (a) and polypropylene having a flexural modulus of less than 100 MPa (hereinafter, sometimes referred to as "polypropylene (d)"). It is even more preferable that the polypropylene (d) contains one having a flexural modulus of 1 MPa or more and less than 100 MPa.

The polypropylene (a) and the polypropylene (d) may be of the same type or different types, so long as their flexural modulus are within the above numerical ranges.

### <Polypropylene (a) having a flexural modulus of 100 MPa or more and 2000 MPa or less>

### (Flexural modulus)

The flexural modulus of the polypropylene (a) is 100 MPa or more and 2000 MPa or less. When the lower limit of the flexural modulus of the polypropylene (a) is 100 MPa or more, the mechanical strength and heat resistance of the resulting adhesive can be improved. From this viewpoint, the lower limit of the flexural modulus of the polypropylene (a) is preferably 200 MPa or more, and more preferably 300 MPa or more.

On the other hand, when the upper limit of the flexural modulus of the polypropylene (a) is 2000 MPa or less, the impact resistance can be improved. From this viewpoint, the upper limit of the flexural modulus of the polypropylene (a) is preferably 1800 MPa or less, and more preferably 1500 MPa or less.

The flexural modulus of the polypropylene (a) can be controlled by the type and content of other monomers other than propylene in a propylene-based copolymer. For example, in the case of a propylene-ethylene copolymer, the flexural modulus tends to decrease as the content of ethylene units increases.

### (MFR)

The MFR of the polypropylene (a) measured in accordance with to JIS K7210 at 230°C and a load of 2.16 kg is preferably 10 g/10 min or more and 50 g/10 min or less.

When the lower limit of the MFR of the polypropylene (a) is 10 g/10 min or more, the fluidity of the modified polypropylene of the present invention can be maintained within a desired range. From this viewpoint, the lower limit of the MFR of the polypropylene (a) is more preferably 20 g/10 min or more.

On the other hand, when the upper limit of the MFR of the polypropylene (a) measured under the above mentioned measurement conditions is 50 g/10 min or less, the mechanical strength required for an adhesive can be maintained. From this viewpoint, the upper limit of the MFR of the polypropylene (a) is more preferably 40 g/10 min or less.

When two or more types of the polypropylene (a) are used, even if some of the polypropylene (a) has an MFR outside the above range, it is acceptable as long as the MFR of the overall polypropylene (a) is within the above numerical range.

### (Density)

The density of the polypropylene (a) is preferably 0.890 g/cm³ or more and 0.910 g/cm3 or less.

When the lower limit of the density of the polypropylene (a) is 0.890 g/cm³ or more, the mechanical strength can be maintained. From this viewpoint, the lower limit of the density of the polypropylene (a) is more preferably 0.895 g/cm³ or more.

On the other hand, when the upper limit of the density of the polypropylene (a) is 0.910 g/cm³ or less, it is possible to impart appropriate flexibility. From this viewpoint, the upper limit of the density of the polypropylene (a) is more preferably 0.905 g/cm³ or less.

When using two or more types of the polypropylene (a), even if some of the polypropylene (a) has a density outside the above range, it is acceptable as long as the density of the overall polypropylene (a) is within the above numerical range.

### (Commercially available polypropylene (a))

Commercially available products may be used as the polypropylene (a). Examples of the commercially available product of the polypropylene (a) include "WINTEC (registered trademark)" manufactured by Japan Polypropylene Corporation.

### <Polypropylene (d) having a flexural modulus of less than 100 MPa or a viscosity at 190°C of 100 cP or more and 3000 cP or less>

### (Flexural modulus/viscosity)

The flexural modulus of the polypropylene (d) is less than 100 MPa or the viscosity at 190°C of the polypropylene (d) is 100 cP or more and 3000 cP or less.

Although the lower limit of the flexural modulus of the polypropylene (d) is not particularly limited, when the flexural modulus of the polypropylene (d) is 1 MPa or more, it tends to be easier to impart flexibility suitable for the adhesive. From this viewpoint, the lower limit of the flexural modulus of the polypropylene (d) is more preferably 5 MPa or more.

On the other hand, when the upper limit of the flexural modulus of the polypropylene (d) is less than 100 MPa, it is possible to impart a minimum level of flexibility to the adhesive when used in combination with the polypropylene (a). From this viewpoint, the upper limit of the flexural modulus of the polypropylene (d) is preferable 90 MPa or less, and more preferably 80 MPa or less.

Even if the polypropylene (d) is soft and its flexural modulus cannot be measured, it can be used as the polypropylene (d) as long as its viscosity at 190°C is 100 cP or more and 3000 cP or less.

The flexural modulus and viscosity of the polypropylene (d) can be controlled by the type and content of other monomers other than propylene in the propylene-based copolymer, just like the flexural modulus of the polypropylene (a).

### (MFR)

The MFR of the polypropylene (d) measured in accordance with JIS K7210 at 230°C and a load of 2.16 kg is preferably 1 g/10 min or more and 30 g/10 min or less.

When the lower limit of the MFR of the polypropylene (d) is 1 g/10 min or more, the fluidity required for the adhesive can be ensured. From this viewpoint, the lower limit of the MFR of the polypropylene (d) is more preferably 2 g/10 min or more.

On the other hand, although the upper limit of the MFR of the polypropylene (d) measured under the above mentioned measurement conditions is not particularly limited, when the MFR is 30 g/10 min or less, heat resistance can be maintained. From this viewpoint, the upper limit of the MFR of the polypropylene (d) is more preferably 20 g/10 min or less.

When two or more types of the polypropylene (d) are used, even if some of the polypropylenes (d) has an MFR outside the above range, it is acceptable as long as the MFR of the overall polypropylene (d) is within the above numerical range.

### (Density)

The density of the polypropylene (d) is preferably 0.855 g/cm³ or more and 0.885 g/cm³ or less.

When the lower limit of the density of the polypropylene (d) is 0.855 g/cm³ or more, mechanical strength can be maintained. From this viewpoint, the lower limit of the density of the polypropylene (d) is more preferably 0.860 g/cm³ or more.

On the other hand, when the upper limit of the density of the polypropylene (d) is 0.885 g/cm³ or less, flexibility can be maintained. From this viewpoint, the upper limit of the density of the polypropylene (d) is more preferably 0.880 g/cm³ or less.

When two or more types of the polypropylene (d) are used, even if some of the polypropylene (d) has a density outside the above range, it is acceptable as long as the density of the overall polypropylene (d) is within the above numerical range.

### (Commercially available polypropylene (d))

Commercially available polypropylene (d) may be used. Examples of the commercially available polypropylene (d) include "Vistamaxx (registered trademark)" manufactured by EXXON Mobil Corporation.

### <Content of the polypropylene (a) and polypropylene (d)>

The raw polypropylene of the modified polypropylene may consist of only the polypropylene (a), or may contain the polypropylene (a) and the polypropylene (d).

The content of the polypropylene (a) relative to 100% by mass of the raw polypropylene is preferably 50% by mass or more and 100% by mass or less, more preferably 50% by mass or more and 99% by mass or less, more preferably 55% by mass or more and 95% by mass or less, and even more preferably 60% by mass or more and 90% by mass or less.

When the content of the polypropylene (a) in the raw polypropylene is equal to or less than the above mentioned lower limit, the mechanical strength and heat resistance of the resulting adhesive can be made good. On the other hand, when the content of the polypropylene (a) is equal to or less than the above mentioned upper limit, the content of the polypropylene (d) can be ensured and flexibility can be imparted to the resulting adhesive.

When the raw polypropylene contains the polypropylene (a) and the polypropylene (d), the content of the polypropylene (d) relative to 100% by mass of the raw polypropylene is preferably 1% by mass or more and 50% by mass or less, more preferably 5% by mass or more and 45% by mass or less, and even more preferably 10% by mass or more and 40% by mass or less.

When the content of the polypropylene (d) in the raw polypropylene is equal to or more than the above mentioned lower limit, the resulting adhesive can be imparted with good flexibility. On the other hand, when the content of the polypropylene (d) is equal to or less than the above mentioned upper limit, the content of the polypropylene (a) can be ensured and the mechanical strength and heat resistance of the adhesive obtained can be made good.

### <Unsaturated carboxylic acid and/or its derivative (b)>

As the unsaturated carboxylic acid used to modify the raw polypropylene, an α,β-ethylenically unsaturated carboxylic acid is preferable. Examples of the α,β-ethylenically unsaturated carboxylic acid include acrylic acid, methacrylic acid, ethacrylic acid, maleic acid, fumaric acid, tetrahydrofumaric acid, itaconic acid, citraconic acid, crotonic acid, and isocrotonic acid. As the derivative of the unsaturated carboxylic acid, acid anhydrides and esters of these unsaturated carboxylic acids are exemplified. The derivative of the unsaturated carboxylic acid may be a derivative such as an acid halide, amide, imide, or the like of these unsaturated carboxylic acids. Among these derivatives, acid anhydrides are preferable.

As the unsaturated carboxylic acid and/or its derivative (b), only one type may be used, or two or more types may be used in combination.

Among these, maleic acid and/or its anhydride are particularly suitable as the unsaturated carboxylic acid and/or its derivative (b).

As a modifier for the raw polypropylene, vinyl silanes such as vinyltrimethoxysilane and the like can be used in combination with the unsaturated carboxylic acid and/or its derivative (b).

The amount of the unsaturated carboxylic acid and/or its derivative (b) used, i.e., the amount blended into the raw material mixture to be subjected to the modification treatment, is usually 0.7 parts by mass or more, preferably 0.9 parts by mass or more, and more preferably 1.1 parts by mass or more, and usually 2.5 parts by mass or less, preferably 2.3 parts by mass or less, and more preferably 2.1 parts by mass or less, based on 100 parts by mass of the raw polypropylene. When the blending amount of the unsaturated carboxylic acid and/or its derivative (b) is equal to or more than the above mentioned lower limit, sufficient modification is easily achieved. When the blending amount of the unsaturated carboxylic acid and/or its derivative (b) is the above mentioned upper limit or less, it is economical and also possible to reduce the content of the unsaturated carboxylic acid and/or its derivative (b) that did not contribute to the modification contained in the obtained polymer composition, i.e., the content (X1-X2) of the unsaturated carboxylic acid and/or its derivative present in a form of a simple substance.

### <Radical generator>

The modification treatment of the raw polypropylene with the unsaturated carboxylic acid and/or its derivative (d) is preferably carried out in the presence of a radical generator. The radical generator is used to carry out a radical reaction when the raw polypropylene is modified with the unsaturated carboxylic acid and/or its derivative (d).

Examples of the radical generator include peroxy esters (c1), dialkyl peroxides (c2), diacyl peroxides, hydroperoxides, ketone peroxides, and the like.

Among these, it is preferable to use the peroxy esters (c1) and the dialkyl peroxides (c2) in combination.

The peroxy esters (c1) are used for the purpose of increasing the reactivity of the raw polypropylene with the unsaturated carboxylic acid and/or its derivative (d).

The dialkyl peroxides (c2) are used for the purpose of adjusting the MFR of the resulting modified polypropylene, i.e., the polymer composition, in a direction toward a higher value.

As the peroxy esters (c1), t-butylperoxyisopropyl carbonate is preferred.

As the dialkyl peroxides (c2), di-t-butyl peroxide is preferred.

As the radical generator, it is particularly preferred to use t-butylperoxyisopropyl carbonate as the peroxy esters (c1) and di-t-butyl peroxide as the dialkyl peroxides (c2).

The amount of the radical generator used, i.e., the amount blended into the raw material mixture to be subjected to the modification treatment, is usually 0.001 parts by mass or more, preferably 0.005 parts by mass or more, more preferably 0.01 parts by mass or more, and usually 5 parts by mass or less, preferably 3 parts by mass or less, and more preferably 2 parts by mass or less, based on 100 parts by mass of the raw polypropylene. When the amount of the radical generator is equal to or more than the above mentioned lower limit, the modification reaction is easily caused to occur sufficiently. When the amount of the radical generator is equal to or less than the above mentioned upper limit, it is possible to suppress a significant decrease in material strength due to promotion of low molecular weight (viscosity reduction) of the polypropylene.

When the peroxy esters (c1) and the dialkyl peroxides (c2) are used in combination as radical generators, it is preferable to use 0.2 parts by mass of more and 1.0 parts by mass or less of the peroxy esters (c1) and 0.05 parts by mass or more and 0.5 parts by mass or less of the dialkyl peroxides (c2) based on 100 parts by mass of the raw polypropylene, in such a way that the total amount is the above mentioned amount of the radical generators.

### <Modification treatment>

Any known method can be used for the process of modifying the raw polypropylene with the unsaturated carboxylic acid and/or its derivative (d). As the modification treatment method, a melt kneading reaction method, a solution reaction method, or a suspension dispersion reaction method can be used. Usually, the melt kneading reaction method is preferred.

When the melt kneading reaction method is used the raw polypropylene, the unsaturated carboxylic acid and/or its derivative (b), and preferably further the peroxy esters (c1) and the dialkyl peroxides (c2) as the radical generators are uniformly mixed in a predetermined blending ratio, and then melt kneaded. The raw polypropylene is preferably the polypropylene (a), more preferably a mixture of the polypropylene (a) and the polypropylene (b). For mixing, a Henschel mixer, a ribbon blender, a V-type blender, or the like can be used. For melt kneading, a single-screw or twin-screw extruder, a roll, a Banbury mixer, a kneader, a Brabender mixer, or the like can usually be used. Among these, a twin-screw extruder is particularly preferred.

The melt kneading is carried out at a temperature of usually 100°C or higher, preferably 120°C or higher, and more preferably 150°C or higher, and usually 300°C or lower, preferably 280°C or lower, and more preferably 250°C or lower, so that the raw polypropylene and the resulting modified polypropylene do not deteriorate due to heat.

### [Adhesive]

The adhesive of the present invention contains the polymer composition of the present invention. The adhesive of the present invention may contain a polymer such as an unmodified polypropylene, and the like, an olefin polymer such as polyethylene, and the like, or a polar polymer such as polyamide, nylon, and the like, within a range that does not impair the adhesion and heat resistance of the polymer composition of the present invention.

### [Aqueous dispersion composition]

The aqueous dispersion composition of the present invention contains the polymer composition of the present invention, a surfactant, and water as essential components. The aqueous dispersion composition of the present invention may also contain a polymer dispersant, a neutralizing agent, and other additives.

### [Polymer composition content]

The content of the polymer composition of the present invention in the aqueous dispersion composition of the present invention is preferably 40% by mass or more, more preferably 50% by mass or more, and even more preferably 60% by mass or more, based on the solid content of the aqueous dispersion composition, from the viewpoint of obtaining sufficient adhesion and heat resistance due to the modified polypropylene in the polymer composition. On the other hand, the content of the polymer composition of the present invention in the aqueous dispersion composition of the present invention is preferably 95% by mass or less, more preferably 90% by mass or less, and even more preferably 85% by mass or less, based on the solid content of the aqueous dispersion composition, from the viewpoint of the viscosity and liquid stability of the aqueous dispersion.

### [Surfactant]

Although the surfactant used in the aqueous dispersion composition of the present invention is not particularly limited, it is preferable to use a nonionic surfactant from the viewpoints of emulsification, safety, and suppression of gelation when various additives are added.

Examples of nonionic surfactants include polyoxyethylene octyl ether, polyoxyethylene decyl ether, polyoxyethylene dodecyl ether, polyoxyethylene myristyl ether, polyoxyethylene cetyl ether, polyoxyethylene stearyl ether, polyoxyethylene oleyl ether, polyoxyethylene isostearyl ether, polyoxyethylene behenyl ether, polyoxyethylene-2-ethylhexyl ether, polyoxyethylene alkyl ether, polyoxyethylene alkyl ether (synthetic), narrow-type polyoxyethylene alkyl ether, polyoxyethylene octyldodecyl ether, polyoxyethylene styrenated phenyl ether, polyoxyethylene β-naphthyl ether, polyoxyethylene hydrogenated castor oil ether, polyethylene glycol monoalkyl fatty acid ester, polyethylene glycol fatty acid ester, and polyoxyethylene sorbitan monolaurate. These may be used alone or in combination of two or more.

In order to obtain a more stable aqueous dispersion composition, a cationic surfactant, an anionic surfactant, an amphoteric surfactant, or a reactive surfactant may be used in combination with the above mentioned nonionic surfactant.

Examples of the cationic surfactant include higher alkyl monoamine salts such as dodecylamine acetate, stearylamine acetate, and the like; alkyl diamine salts such as N-dodecyl-1,3-diaminopropane adipate, N-dodecylpropylenediamine dioleate, and the like; and quaternary ammonium salts such as dodecyltrimethylammonium chloride, behenyltrimethylammonium chloride, and the like.

Examples of the anionic surfactant include sodium salt of semi-hardened beef tallow fatty acid soap, sodium salt of stearic acid soap, potassium salt of oleic acid soap, sodium salt of gum rosin-based disproportionated rosin, dipotassium salt of alkenyl succinate, sodium salt of dodecyl sulfate, anhydrous sodium bisulfite, sodium salt of polyoxyethylene alkyl (C12, C13) ether sulfate, ammonium salt of polyoxyethylene dodecyl sulfate, sodium salt of dodecylbenzene sulfonate, and alkylene oxide adducts of higher alcohols (C6 to 28).

Examples of the amphoteric surfactant include carboxybetaine-based, sulfobetaine-based, phosphobetainebased, amide amino acid-based, and imidazolinium betainebased surfactants.

Examples of the reactive surfactant include compounds having reactive double bonds, such as alkylpropenylphenol polyethylene oxide adducts and their sulfate ester salts, allylalkylphenol polyethylene oxide adducts and their sulfate ester salts, allyldialkylphenol polyethylene oxide adducts and their sulfate ester salts, and the like.

The surfactant is preferably blended in an amount of 1 to 50 % by mass, more preferably 5 to 40 % by mass, based on the polymer composition of the present invention.

When the amount of the surfactant blended is equal to or more than the above mentioned lower limit, the polymer composition of the present invention can be stably dispersed in water for a long period of time. When the amount of the surfactant blended is equal to or less than the above mentioned upper limit, adhesion and heat resistance can be ensured.

### [Polymer dispersant]

Examples of the polymer dispersant include polycarboxylic acid-based polymer dispersants having multiple carboxyl groups in the molecule, polyamine-based polymer dispersants having multiple amino groups in the molecule, polymer dispersants having multiple amide groups in the molecule, and polymer dispersants containing multiple polycyclic aromatic compounds in the molecule. These may be used alone or in combination of two or more.

The polymer dispersant is preferably blended in an amount of 0.1 to 10% by mass, and more preferably 0.2 to 3% by mass, based on the polymer composition of the present invention.

When the blending amount of the polymer dispersant is equal to or more than the above mentioned lower limit, the stability of the polymer composition of the present invention can be further improved. When the blending amount of the polymer dispersant is equal to or less than the above mentioned upper limit, the adhesion and heat resistance tend to be easily maintained.

### [Neutralizing agent]

Examples of the Neutralizing agent include potassium hydroxide, sodium hydroxide, magnesium hydroxide, calcium hydroxide, sodium carbonate, sodium bicarbonate, potassium carbonate, potassium bicarbonate, calcium carbonate, calcium bicarbonate, magnesium carbonate, magnesium bicarbonate, monolaurylamine, trimethylamine, dimethylmonoethanolamine, triethanolamine, ethylenediamine, ammonia, morpholine, N-methylmorpholine, N-ethylmorpholine, and the like. These may be used alone or in combination of two or more.

The neutralizing agent can be blended in an appropriate amount depending on the application. It is preferable to blend the neutralizing agent in an amount of about 0.1 to 10 % by mass based on the total amount of the aqueous dispersion composition.

### [Other additives]

The aqueous dispersion composition of the present invention may further contain additives that are typically used in aqueous dispersions as adhesives, such as an antioxidant, a surface treatment agents, a lubricant, a slip agent (or a texture improver), an antistatic agent (which partially overlap with the above mentioned surfactant), a pH adjuster (which partially overlap with the above mentioned neutralizing agent), an ultraviolet absorber, a light stabilizer, a heat stabilizer, an antifoaming agent, an antiaging agent, and a leveling agent, in the usual blending amounts.

Examples of the antioxidant include phenolic antioxidants such as hydroquinone, methoxyhydroquinone, catechol, 2,6-di-t-butyl-p-cresol (BHT), 2,2'-methylenebis(4-methyl-6-t-butylphenol), and the like; sulfur-containing compounds such as thiourea, tetramethylthiuram disulfide, dimethyldithiocarbamic acid and its salts, sodium sulfite, sodium thiosulfate, 2-mercaptobenzothiazole and its salts, dilauryl 3,3'-thiodipropionate (DLTDP), distearyl 3,3'-thiodipropionate (DSTDP), and the like; phosphorus-containing compounds such as triphenyl phosphite, triethyl phosphite, sodium phosphite, sodium hypophosphite, triphenyl phosphite (TPP), triisodecyl phosphite (TDP), and the like; and nitrogencontaining compounds such as octylated diphenylamine, N-n-butyl-p-aminophenol, N,N-diisopropyl-p-phenylenediamine, urea, guanidine, and the like.

Examples of the surface treatment agent include coupling agents such as aminosilane-based coupling agents, epoxysilane-based coupling agents, vinylsilane-based coupling agents, methacrylosilane-based coupling agents, ureidosilane-based coupling agents, borane-based coupling agents, titanate-based coupling agents, aluminum-based coupling agents, chromium-based coupling agents, zirconiumbased coupling agents, and the like; and colloidal gels such as colloidal silica, colloidal alumina, and the like.

Examples of the lubricant include hydrogenated hardened animal and vegetable oils, paraffin wax, esterbased synthetic oils, and the like.

Examples of the slip agent (or the texture improver) include butyl stearate, tetraethylenepentamine distearate, hydrogenated castor oil, imidazoline-based fatty acid amides, cationic fatty acid amides, cationic polyethyleneimine polyamides, bisphenol A poly(oxyethylene) ether glycol, and the like.

Examples of the antistatic agent include various surfactants such as anionic surfactants, cationic surfactants, and the like.

Examples of the pH adjuster include acids such as inorganic acids such as hydrochloric acid, sulfuric acid, phosphoric acid, and the like, and organic acids such as citric acid, succinic acid, malic acid, lactic acid, and the like; and alkalis such as sodium hydroxide, potassium hydroxide, sodium carbonate, potassium carbonate, monoethanolamine, diethanolamine, triethanolamine, and the like.

Examples of the ultraviolet absorber include benzophenone-based ultraviolet absorbers, benzotriazolebased ultraviolet absorbers, cyanoacrylate-based ultraviolet absorbers, triazine-based ultraviolet absorbers, cyclic iminoester-based ultraviolet absorbers, phenyl salicylate-based ultraviolet absorbers, and the like.

Examples of the light stabilizer include hindered amine light stabilizers such as 2,2,6,6-tetramethyl-4-piperidyl stearate, 1,2,2,6,6-pentamethyl-4-piperidyl stearate, and the like.

### [Organic solvent]

Although the aqueous dispersion composition of the present invention uses water as a dispersion medium, it may contain a water-soluble organic solvent as needed.

In this case, examples of the organic solvent that can be used include alcohols such as methanol, ethanol, n-propyl alcohol, isopropyl alcohol, n-butyl alcohol, isobutyl alcohol, sec-butyl alcohol, t-butyl alcohol, n-amyl alcohol, isoamyl alcohol, sec-amyl alcohol, t-amyl alcohol, 1-ethyl-1-propanol, 2-methyl-1-butyl alcohol, n-hexyl alcohol, cyclohexyl alcohol, and the like; ketones such as methyl ethyl ketone, methyl isobutyl ketone, ethyl butyl ketone, cyclohexanone, and the like; ethers such as tetrahydrofuran, dioxane, and the like; esters such as ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate, dimethyl carbonate, and the like; and glycol derivatives such as ethylene glycol monomethyl ether, ethylene glycol monoethyl ether, ethylene glycol monopropyl ether, ethylene glycol monobutyl ether, ethylene glycol ethyl ether acetate, and the like. In addition, 1-methoxy-2-propanol, 1-ethoxy-2-propanol, 3-methoxy-3-methyl-1-butanol, methoxybutanol, acetonitrile, dimethylformamide, dimethylacetamide, diacetone alcohol, ethyl acetoacetate, 1,2-dimethylglycerin, 1,3-dimethylglycerin, trimethylglycerin, and the like can also be used. These organic solvents may be used alone or in combination of two or more.

When the organic solvent is used, there is no particular restriction on the amount of the organic solvent. The amount of the organic solvent is preferably 0 to 10% by mass based on the total aqueous medium.

### [Solid content concentration]

The solid content concentration of the aqueous dispersion composition of the present invention, that is, the total concentration of the components other than water (which may be an aqueous medium of water and an organic solvent), is preferably 5% by mass or more, more preferably 10% by mass or more, and even more preferably 20% by mass or more, from the viewpoint of ensuring the effective adhesive amount after application of the aqueous dispersion.

On the other hand, from the viewpoints of the liquid stability and application properties of the aqueous dispersion, the solid content concentration of the aqueous dispersion composition of the present invention is preferably 60% by mass or less, more preferably 55% by mass or less, and even more preferably 50% by mass or less.

### [Average particle size]

The average particle size of the dispersed particles of the modified polypropylene in the aqueous dispersion composition of the present invention can be adjusted arbitrarily depending on the application, and is not particularly limited. The average particle size of the dispersed particles is preferably 50 to 1,000 nm, and particularly preferably 100 to 300 nm, for applications such as building materials and automobiles.

### [pH]

From the viewpoint of the liquid stability of the aqueous dispersion, the pH of the aqueous dispersion composition of the present invention is preferably 6 or more, and more preferably 6.5 or more, and preferably 12 or less, and more preferably 11.5 or less.

### [Method of producing aqueous dispersion composition]

The method of producing the aqueous dispersion composition of the present invention is not particularly limited. The aqueous dispersion composition of the present invention can be obtained, for Example, by charging the polymer composition of the present invention, the surfactant, the aqueous medium, and, if necessary, the polymeric dispersant, the neutralizing agent, and the like, into an apparatus such as an autoclave that can be pressurized and has a normal shear force, and then heating and stirring the mixture to a temperature near or equal to the softening temperature of the modified polypropylene in the polymer composition of the present invention. Here, the aqueous medium is a liquid mainly composed of water, and may contain the above mentioned water-soluble organic solvent.

More specifically, the polymer composition of the present invention, the surfactant, the polymer dispersant, other additives other than the neutralizing agent, and water are added to an autoclave having an emulsifying device equipped with a stirrer, thermometer, and temperature controller, and the mixture is heated to about 160 to 200°C under stirring at 100 to 1500 rpm to finely disperse the polymer composition to the above mentioned suitable dispersed particle size. Thereafter, the mixture is cooled to room temperature to about 80°C, and a neutralizing agent is added as necessary to adjust the pH to the above mentioned suitable pH.

If necessary, water may be further added to adjust the solid content concentration.

### [Uses]

The adhesive and the aqueous dispersion composition of the present invention can be effectively used in the adhesion of low polarity adherends such as ABS to metals or highly polar adherends in the building materials and automotive fields, particularly due to their excellent adhesion and heat resistance.

### EXAMPLES

Now, specific embodiments of the present invention will be described in further detail with reference to Examples. The present invention is not limited to the following Examples as long as the present invention is within the gist thereof.

The values of various production conditions and evaluation results in the following Examples are to be understood as preferred upper or lower limit values of embodiments of the present invention, and preferred ranges may be a range defined by a combination of the upper or lower limit value and a value of Examples described below or by a combination of values of Examples described below.

### [Raw materials]

In the following Examples and Comparative Examples, the raw materials used in the preparation of the modified polypropylene, which is a polymer composition, are as follows.

### <Polypropylene (a)>

### a-1: Propylene-ethylene copolymer

WINTEC (registered trademark) WMG03 (flexural modulus: 1250 MPa, MFR (230°C, load 2.16 kg): 30 g/10 min, density: 0.900 g/cm³) manufactured by Japan Polypropylene Corporation a-2: Propylene-ethylene copolymer
WINTEC (registered trademark) WFW4M (flexural modulus: 900 MPa, MFR (230°C, load 2. 16kg): 7g/10min, density: 0.900g/cm³) manufactured by Japan Polypropylene Corporation

### <Polypropylene (d)>

d-1: Propylene-ethylene copolymer
   Vistamaxx (registered trademark) 3020FL (flexural modulus: 47MPa, MFR (230°C, load 2.16kg): 2g/10min, density: 0.873g/cm³) manufactured by EXXON Mobil Corporation
d-2: Propylene-ethylene copolymer
   Vistamaxx (registered trademark) 6102 (flexural modulus: 11 MPa, MFR (230°C, load 2.16 kg): 3 g/10 min, density: 0.862 g/cm³) manufactured by EXXON Mobil Corporation
d-3: Propylene-ethylene copolymer
   Vistamaxx (registered trademark) 8880 (viscosity (190°C): 1200 cP, density: 0.879 g/cm³) manufactured by EXXON Mobil Corporation

### <Unsaturated carboxylic acid and/or its derivative (b)>

### Maleic anhydride (commercially available product)

### <Radical generator>

C-1: t-butylperoxyisopropylcarbonate that is the peroxyester (c1)

### Perbutyl I manufactured by NOF Corporation

C-2: Di-t-butyl peroxide that is the dialkyl peroxide (c2) Perbutyl D manufactured by NOF Corporation
C-3: t-butylperoxy-2-ethylhexanoate that is the peroxyester (c1)

### Perbutyl O manufactured by NOF Corporation

### [Preparation and evaluation of polymer composition]

### <Example 1>

100 parts by mass of the component (a-1), 0.6 parts by mass of the component (C-1), 0.2 parts by mass of the component (C-2), and 1.5 parts by mass of maleic anhydride that is the component (b) were dry blended and mixed, and melt kneaded using a twin-screw extruder (manufactured by the Japan Steel Works, Ltd., TEX25αIII, D=25mmφ, L/D=52.5) at a set temperature of 230°C, a screw rotation speed of 400 rpm, and an extrusion rate of 20 kg/h. A pellet-shaped modified polypropylene modified with maleic anhydride was obtained by strand cutting. The modified polypropylene pellets obtained were measured for the mass ratio X1 (% by mass), which is the content (X1) of the unsaturated carboxylic acid and/or its derivative before acetone extraction, the mass ratio X2 (% by mass), which is the content (X2) of the unsaturated carboxylic acid and/or its derivative after acetone extraction, and MFR (180°C, 2.16 kg) by the above mentioned method, and the YI, adhesion, and heat resistance were evaluated by the following method. The results are shown in Table 1.

### <Examples 2 to 7, Comparative Examples 1 to 6>

Modified polypropylene was obtained in the same manner as in Example 1, except that the blending composition was changed as shown in Table 1, and evaluation was performed in the same manner. The results are shown in Table 1.

### <Evaluation method>

### (1) YI

The YI of the modified polypropylene pellets was measured using a commercially available color difference meter (for Example, ZE series manufactured by Nippon Denshoku Industries Co., Ltd.). Measurements were performed N=3, and the average value was taken as the YI value.

### (2) Adhesion

A 100 mm square, 1 mm thick sheet was made from modified polypropylene using a heat press machine under the conditions of a set temperature of 200°C, 10 MPa, and 2 minutes. The obtained sheet was then bonded to a 100 mm square glass plate, and a heat press machine was used to prepare an adhesion sample under the conditions of a set temperature of 200°C, 5 MPa, and 3 minutes.

The adhesion sample obtained above was cut into a width of 15 mm using a cutter to prepare a test piece, and a 90° peel test was performed at a speed of 50 mm/min in an atmosphere of 23°C to measure the adhesion strength. The obtained measurements were evaluated in accordance with to the following criteria.
∘: 10N/15mm or more
△: 5N/15mm or more, less than 10N/15mm
×: Less than 5N/15mm

### (3) Heat resistance

A sheet measuring 100mm square and having a thickness of 1mm was made from the modified polypropylene using a heat press machine under the conditions of a set temperature of 200°C, 10MPa, and 2 minutes. A sample measuring 20mm square was cut out from this sheet and heated in an oven at 200°C for 30 minutes. After heating, the sample was removed from the oven and the degree of discoloration of the sample before and after heating was evaluated by visual observation. When the discoloration was small, it was evaluated as good "o", and when the discoloration was large, it was evaluated as poor "×".

### [Table 1]

**<Table-1 >**

| | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| Composition (parts by mass) | Polypropylene (a) | a-1 (WMG03) | 100 | 60 | 60 | 60 | 40 | 60 | 100 | 60 | 60 |
| | | a-2 (WFW4M) | | 40 | 20 | 20 | 30 | 20 | | 40 | 20 |
| | Polypropylene (b) | d-1 (VM3020FL) | | | 20 | | | 20 | | | 20 |
| | | d-2 (VM6102) | | | | 20 | 20 | | | | |
| | | d-3 (VM8880) | | | | | 10 | | | | |
| | Radical generator (c) | C-1 (Perbutyl I) | 0.6 | 0.6 | 0.6 | 0.6 | 0.6 | 0.4 | | | |
| | | C-2 (Perbutyl D) | 0.2 | 0.2 | 0.2 | 0.2 | 0.2 | 0.2 | | | |
| | | C-3 (Perbutyl 0) | | | | | | | 1.6 | 1.6 | 1.6 |
| | Unsaturated carboxylic acid and/or its derivative (b) | Maleic anhydride | 1.5 | 1.5 | 1.5 | 1.5 | 1.5 | 1.2 | 1.5 | 1.5 | 1.5 |
| Measurement results | Content of unsaturated carboxylic acid and/or its derivative (b) | Before acetone extraction (X1) | 1.4 | 1.4 | 1.4 | 1.4 | 1.5 | 1.1 | 1.4 | 1.4 | 1.4 |
| | | After acetone extraction (X2) | 1.2 | 1.1 | 1.1 | 1.3 | 1.2 | 0.9 | 0.8 | 0.7 | 0.7 |
| | Content of unsaturated carboxylic acid and/or its derivative (b) present as a single form (X1-X2) | | 0.2 | 0.3 | 0.3 | 0.1 | 0.3 | 0.2 | 0.6 | 0.7 | 0.7 |
| | MFR(180°C, 21. 6kg) | g/10min | 35 | 17 | 18 | 15 | 18 | 7 | 4 | 3 | 2 |
| | YI | - | 8 | 7 | 7 | 6 | 8 | 5 | 11 | 12 | 11 |
| Evaluation results | Adhesion | To Glass | Δ | Δ | ○ | ○ | ○ | ○ | 11 | × | Δ |
| | Heat resistance (200°C) | Color tone change | ○ | ○ | ○ | ○ | ○ | ○ | × | × | × |

### <Discussion>

As shown in Table 1, in Examples 1 to 7, which used the combination of Perbutyl I (C-1), that is the peroxy ester (c1), and Perbutyl D (C-2), that is the dialkyl peroxide (c2), as the radical generators, the reaction rate of maleic anhydride was high, and therefore the content (X1-X2) of the unsaturated carboxylic acid and/or its derivatives present in a form of a simple substance, which is the amount of maleic anhydride residue, was very low. In addition, the YI of the modified polypropylene was low, resulting in excellent color tone. The modified polypropylene produced in this way has good adhesion and excellent heat resistance, so there was little change in color tone after the heat resistance test.

In Comparative Examples 1 to 3, in which only Perbutyl O, that is the peroxyester (c1), was used as the radical generator, the amount of maleic anhydride residue, i.e., the content (X1-X2) of the unsaturated carboxylic acid and/or its derivatives present in a form of a simple substance was high, resulting in poor adhesion and a large change in color tone after the heat resistance test.

In Comparative Example 4, in which 1.4 parts by mass of Perbutyl I (C-1) and 0.8 parts by mass of Perbutyl D (C-2) were used in combination as the radical generators, the content (X2) of the unsaturated carboxylic acid and/or its derivative graft-polymerized to the modified polypropylene contained in the polymer composition was high, resulting in a large change in color tone after the heat resistance test.

In Comparative Example 5, in which only Perbutyl D (C-2) was used as the radical generator, the content (X2) of the unsaturated carboxylic acid and/or its derivative graft-polymerized to the modified polypropylene contained in the polymer composition and the amount of maleic anhydride residue, i.e., the content (X1-X2) of the unsaturated carboxylic acid and/or its derivative present in a form of a simple substance, were both high, and the MFR was also high, resulting in poor adhesion and a large change in color tone after the heat resistance test.

In Comparative Example 6, in which 0.4 parts by mass of Perbutyl I (C-1) and 0.3 parts by mass of Perbutyl D (C-2) were used in combination as the radical generators, the amount of maleic anhydride residue, i.e., the content (X1-X2) of the unsaturated carboxylic acid and/or its derivative present in a form of a simple substance, was high, resulting in poor adhesion and a large change in color tone after the heat resistance test.

Although the present invention has been described in detail using specific embodiments, it will be apparent to those skilled in the art that various changes can be made without departing from the spirit and scope of the present invention.

This application is based on Japanese Patent Application No. 2022-153904, filed on September 27, 2022, which is incorporated by reference in its entirety.

## Claims

1. A polymer composition comprising a modified polypropylene modified with at least one selected from the group consisting of an unsaturated carboxylic acid and a derivative thereof,
wherein a difference (X1-X2) between a mass ratio X1 (% by mass) defined below and a mass ratio X2 (% by mass) defined below is 0.01% by mass or more and 0.5% by mass or less,
the mass ratio X2 (% by mass) is 0.7% by mass or more and 1.8% by mass or less, and
an MFR of the polymer composition measured in accordance with JIS K7210 under conditions of 180°C, a load of 2.16 kg, and a 1 mm orifice is 1 g/10 min or more and 40 g/10 min or less.
Mass ratio X1 (% by mass): The polymer composition is press-molded into a circular sheet having a thickness of 100 µm and a diameter of 20 mm under conditions of 200°C, 5 MPa, and for 3 minutes. The obtained circular sheet is used as a measurement sample, and carbonyl characteristic absorption at 1900 to 1600 cm⁻¹ of the sample is measured by infrared absorption spectroscopy. A calibration curve is created from the measured values. The mass ratio (% by mass) of the total mass of the unsaturated carboxylic acid and/or its derivative graft-polymerized to the polypropylene in the measurement sample and the unsaturated carboxylic acid and/or its derivative present in a form of a simple substance in the measurement sample to the mass of the measurement sample is calculated from the calibration curve. A value thus calculated is the mass ratio X1 (% by mass).
Mass ratio X2 (% by mass): The polymer composition is press-molded into a circular sheet having a thickness of 100 µm and a diameter of 20 mm under conditions of 200°C, 5 MPa, and for 3 minutes. The obtained circular sheet is placed in a Soxhlet extractor, refluxed with acetone at 80°C for 1 hour, and then dried at 80°C for 2 hours. The dried circular sheet is used as a measurement sample, and carbonyl characteristic absorption at 1900 to 1600 cm⁻¹ of the sample is measured by infrared absorption spectroscopy. A calibration curve is created from the measured values. The mass ratio (% by mass) of the mass of the unsaturated carboxylic acid and/or its derivative graft-polymerized to the polypropylene in the measurement sample to the mass of the measurement sample is calculated from the calibration curve. A value thus calculated is the mass ratio X2 (% by mass).

2. The polymer composition according to claim 1, wherein the polymer composition has an MFR of 5 g/10 min or more and 40 g/10 min or less, measured in accordance with JIS K7210 under conditions of 180°C, a load of 2.16 kg, and a 1 mm orifice.

3. The polymer composition according to claim 1 or 2, wherein the polymer composition is a polymer composition for aqueous dispersion.

4. A method for producing the polymer composition according to claim 1, comprising a step of reacting a raw material polypropylene containing polypropylene (a) having a flexural modulus of 100 MPa or more and 2000 MPa or less with an unsaturated carboxylic acid and/or its derivative (b) in the presence of peroxy esters (c1) and dialkyl peroxides (c2).

5. The method for producing the polymer composition according to claim 4, wherein the peroxy esters (c1) are t-butylperoxyisopropyl carbonates.

6. The method for producing the polymer composition according to claim 4 or 5, wherein the dialkyl peroxides (c2) are di-t-butyl peroxides.

7. The method for producing the polymer composition according to claim 4, wherein the raw material polypropylene further contains polypropylene (d) having a flexural modulus of less than 100 MPa or a viscosity at 190°C of 100 cP or more and 3000 cP or less.

8. The method for producing the polymer composition according to claim 4, wherein the content of the polypropylene (a) is 50% by mass or more and 100% by mass or less based on 100% by mass of the raw material polypropylene.

9. The method for producing the polymer composition according to claim 7, wherein the content of the polypropylene (d) is 1% by mass or more and 50% by mass or less based on 100% by mass of the raw material polypropylene.

10. An adhesive comprising the polymer composition according to claim 1 or 2.

11. An aqueous dispersion composition comprising the polymer composition according to claim 1 or 2, a surfactant, and water.
